# EUROPEAN PATENT SPECIFICATION

(11) **EP 0 723 094 B1**
(45) Date of publication and mention of the grant of the patent: **27.06.2001**
(21) Application number: 96300366.0
(22) Date of filing: 18.01.1996
(51) Int. Cl.: F16H 25/22, F01L 1/344, F16D 3/10

(54) **A phase-adjusting device for rotatable members**
Einstellvorrichtung zur Veränderung der Phase für Drehelemente
Système de réglage de la phase pour éléments tournants

(30) Priority: 19.01.1995 JP 661195
(43) Date of publication of application: 24.07.1996
(73) Proprietor: Hihaisuto Seiko Co Ltd, Itabashi-Ward, Tokyo (JP)
(72) Inventor: Hirose, Kazuya, Shinjuku-ward, Tokyo (JP)
(74) Representative: Bryer, Kenneth Robert

(56) References cited:
- DE-A- 3 438 088
- DE-A- 4 107 624
- US-A- 2 197 155
- US-A- 3 685 499
- US-A- 5 152 263
- RESEARCH DISCLOSURE, no. 304, 1 August 1989, page 583 XP000069772 "TORSIONAL ACTUATOR"

## Description

The present invention relates to a device for adjusting the relative phase between two rotatable members, especially shafts, connected through a transmission mechanism. The present invention finds particular application as a phase-adjusting device for rotatable shafts, and may be simple in structure, made to small dimensions if appropriate, and so designed that only a low force is required to actuate it.

Phase-adjusting devices are known as such. One example of the industrial application of a phase-adjusting device can be found in connection with internal combustion engines, in which the cam shaft which controls the opening and closing movements of induction and/or exhaust valves, and which is driven from the crank shaft of the engine, may be provided with means for adjusting the timing of the opening and closing movements of the valves by varying the phase relationship between the cam shaft and the crank shaft. Prior art phase-adjusting devices of this type include a device using a planetary gear (see Japanese laid open patent specification no. 93-10112) and a device using a helical gear (see Japanese laid open patent specification no. 89-224407).

However, both of these prior art devices have disadvantages; the former has a problem in that the mechanism is complicated and the latter has a problem in that a large force is required for operating the phase adjustment movement.

The present invention seeks to provide a phase-adjusting device for rotatable members in which the above-identified disadvantages of the prior art are overcome or at least substantially reduced.

Research disclosure XP 000 069 772 being the closest prior art discloses a phase-adjustment device in a four-square test machine in which rotatable members are coupled by a splined coupling comprising helical grooves in each rotatable member and a plurality of balls disposed therebetween.

According to the present invention there is provided a phase-adjusting device for adjusting the phase between rotatable members comprising a first and a second rotatable member which is coaxially mounted within it, an inner cylindrical surface of the first rotatable member and an outer cylindrical surface of the second rotatable member, each having a plurality of helical grooves formed thereon, the helical grooves of the said two members housing a plurality of balls by which rotary motion is transmitted from one rotatable member to the other and adjustment means for causing relative phase adjustment of the said first and second rotatable members, characterised in that one of the said first and second rotatable members is formed as an intermediate cylinder or sleeve between an inner rotatable shaft and an outer rotatable member, one of which constitutes the other of the said first and second rotatable members, the intermediate cylinder or sleeve being coupled for rotation with the other of the inner rotatable shaft or the outer rotatable member by a coupling which allows relative axial displacement thereof.

In any embodiment the first and second rotatable members may be displaced in relation to one another axially, this motion being facilitated by the balls located in the helical spline coupling between the two relatively rotatable members. Because of the presence of the balls only a small force is required to achieve this movement. The axial displacement results in a change in the relative angle between the first and second rotatable members thus changing their phase relationship.

In one embodiment (shown), the said first rotatable member is formed as the said intermediate cylinder or sleeve between the said inner rotatable shaft and the said outer rotatable member, the outer rotatable member and the intermediate cylinder or sleeve being coupled for rotation by a splined coupling comprising axial grooves in each of the said outer rotatable member and the said intermediate cylinder or sleeve, each groove housing a plurality of balls.

In this embodiment the first rotatable member, constituted by cylinder or sleeve may be located intermediate between an inner rotatable shaft constituting the second rotatable member and an outer rotatable member with respect to which the sleeve is coupled for rotation by corresponding axially extending splined grooves on the outer surface of the sleeve and the inner surface of the outer member, engaged by balls which allow relative axial displacement of the intermediate sleeve with respect to the outer member with low force regardless of whether the two members are in rotation or stationary (that is both members will rotate together since relative rotation is prevented by the splined coupling). The helical coupling provided by the helical grooves on the intermediate sleeve or cylinder, which constitutes the first rotatable member, and on the inner shaft, which constitutes the second rotatable member, causes relative angular displacement between the shaft and the intermediate sleeve, and therefore between the shaft and the outer member when the intermediate sleeve is displaced axially with respect to the shaft.

In a second embodiment the said second rotatable member is formed as the said intermediate cylinder or sleeve between the said inner rotatable shaft and the said outer rotatable member, the said rotatable inner rotatable shaft and the said intermediate cylinder or sleeve being coupled for rotation together by splined coupling comprising axial grooves in each of the said inner rotatable shaft and the said intermediate cylinder or sleeve, each groove housing a plurality of balls.

In preferred embodiments of the present invention the said plurality of balls in the said axial grooves and/or the said helical grooves are located in position by a cage.

One embodiment of the present invention will now be described in more detail with reference to the accompanying drawings, in which:
Figure 1 is an axial sectional view through a first embodiment of the present invention;
Figure 2 is a section taken on the line A-A of Figure 1;
Figure 3 is an enlarged view of a detail of Figure 2;
Figure 4 is an axial sectional view of the embodiment of Figures 1 to 3 showing the relative positions reached after a force has been applied to effect phase adjustment; and
Figure 5 is a sectional view taken on the line B-B of Figure 4.

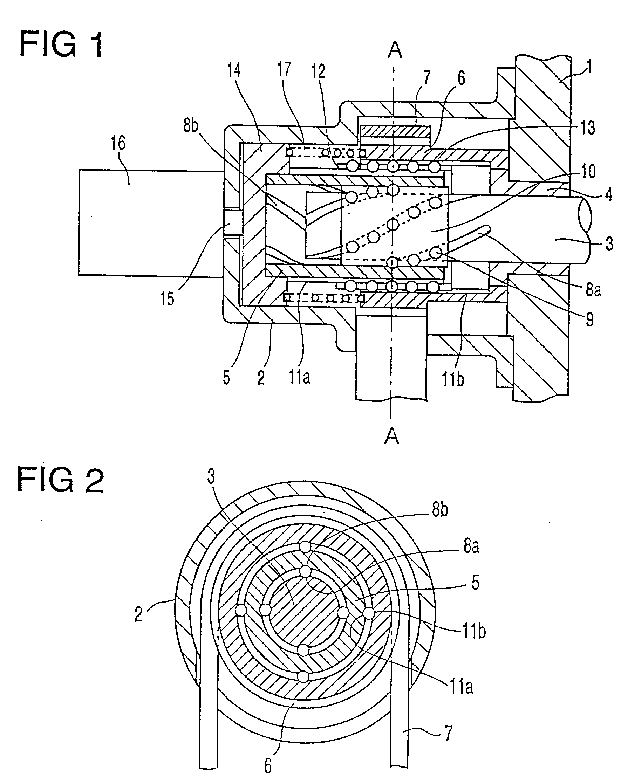

Referring first to Figures 1 to 5, in which the embodiment illustrated corresponds to the first mentioned embodiment of the invention, there are shown the essential parts of a device formed as a phase-adjusting device for adjusting the timing of opening and closing movements of induction or exhaust valves in an engine.

In Figure 1 there is shown a supporting wall 1 which may, for example, be a cylinder head in the specific example described. A housing 2 is fixed on the supporting wall 1 by means not shown and a rotatable shaft 3 (corresponding to the said second rotatable member (which may be a cam shaft for an induction or exhaust valve is mounted so that one end thereof extends into the housing 2 through a bearing 4 provided in the supporting wall 1. The shaft 3 is held against axial displacement by means not shown.

One end of the rotatable shaft 3 is surrounded by an intermediate cylinder 5 which is located coaxially within a fixed pulley 6. The pulley 6 corresponds to the outer rotatable member described above. Over the pulley 6 passes a belt 7 which also passes over a further rotatable member (not shown) such as a pulley provided on the crank shaft of the engine if, for example, the belt 7 is a timing belt and the shaft is a cam shaft as discussed above. In this case the timing belt 7 will be provided with teeth and the pulley 6 will have corresponding teeth for ensuring non-slip engagement between them.

On the outer surface of one end of the rotatable shaft 3 there is formed a set (in this example four) of helical grooves 8A, and corresponding thereto is a set of helical grooves 8B formed on the inner surface of the intermediate cylinder 5. A plurality of balls 9 are housed in the helical grooves 8A and 8B and trapped between them. The balls are located in position with respect to one another by a cage 10.

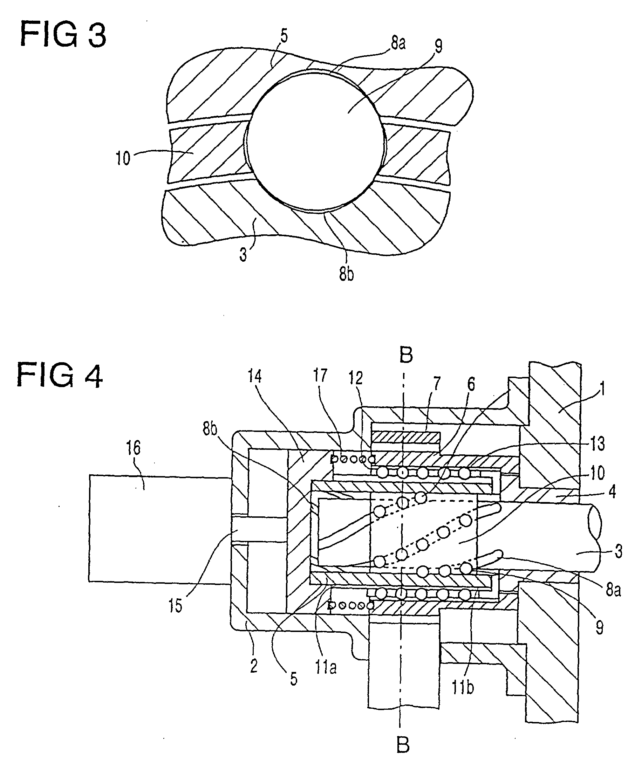

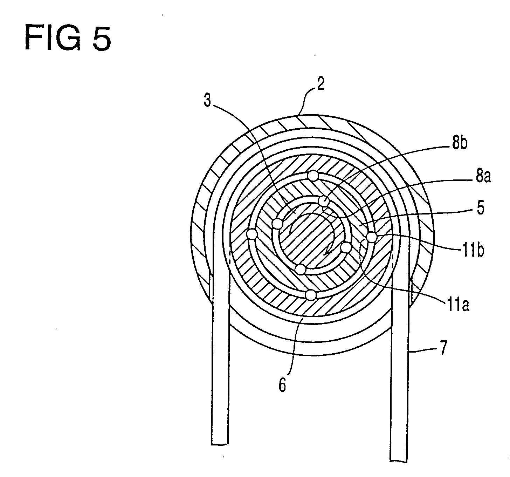

On the outer surface of the intermediate cylinder 5 is formed a set of axially extending spline grooves 11A and, correspondingly, the inner surface of the pulley 6 is formed with matching axially extending spline grooves 11B. A plurality of balls 13, located in position with respect to one another by a cage 12, are trapped between the spline grooves 11A and 11B. The helical grooves 8 and the spline grooves 11 both have a curved gothic arch cross-sectional shape as shown in Figure 3. In Figures 2 and 5 the cages 10 and 12 are not shown for simplicity.

The intermediate cylinder 5 has an associated actuating body 14 mounted at one end thereof. The actuating body 14 can rotate, together with the intermediate cylinder 5, and is axially displaceable with the intermediate cylinder (that is horizontally as shown in the drawing) by an actuating rod 15 of a linear actuator such as an hydraulic cylinder. Between the actuating body 14 and the pulley 6 is located a compression coil spring 17 which urges the actuating body 14 to the left as viewed in Figure 1.

In the above-described configuration, if the pulley 6 is caused to rotate by the timing belt 7, the rotation of the pulley 6 is transmitted to the intermediate cylinder 5 by the set of balls 13 trapped between the spline grooves 11A and 11B, thereby causing the intermediate cylinder 5 to rotate together with the actuating body 14. Since the intermediate cylinder 5 is held by the actuating body 14 and does not move axially, the rotation of the intermediate cylinder 5 is transmitted to the shaft 3 through the balls 9 trapped between the helical grooves 8A and 8B of the cylinder 5 and the shaft 3 respectively whereby to cause the shaft 3 to rotate as a consequence of the rotation of the cylinder 5.

If, with the components all rotating, the actuating body 14 is moved horizontally as viewed in the drawings, by displacement of the actuating rod 15 driven by the actuator 16, the intermediate cylinder 5 is caused to move correspondingly axially with respect to the pulley 6 with very little frictional resistance due to the presence of the plurality of balls 13 between the spline grooves 11A and 11B. As described above, since the rotatable shaft 3 is axially fixed against displacement the axial movement of the intermediate cylinder 5 causes the rotatable shaft 3 to be turned with respect to the intermediate cylinder 5 by the forces transmitted through the balls located in the helical grooves 8A and 8B. The shaft is turned through an angle corresponding to the distance by which the intermediate cylinder 5 is moved. Thus the relative angle between the rotatable shaft 3 and the pulley 6 is caused to change, thereby changing the phase relationship of the rotatable shaft 3 and the rotatable member driving the belt 7. If the actuating rod 15 is extended in the relative position shown in Figures 1 and 2, in order to move the intermediate cylinder 5 by the actuating body 14 to the right as viewed in Figure 1, the rotatable shaft 3 is turned clockwise with respect to the pulley 6 so that the relative phase of the pulley and the shaft is changed to that shown in Figure 5.

On the other hand, if the intermediate cylinder 5 is moved from the position shown in Figure 4 to the position shown in Figure 1 the rotatable shaft 3 is turned anticlockwise (as viewed in Figures 2 and 5) from the position shown in Figure 5 towards that shown in Figure 1 thus changing is phase relation with the pulley 6. In this case the compression coil spring 17 acts to maintain the actuating body 14 in contact with the actuating rod 5 as the actuating rod 15 is drawn into the actuator 16, but is not necessarily required, depending upon the design of the actuator 16 and the coupling between the rod 15 and the actuating body. If, for example, a double-acting actuator is used as the actuator 16 and the actuator body 14 is fixed to the rod 15, no spring is needed.

In the above example a spline coupling supported on linear arrays of balls is provided between the pulley 6 corresponding to the outer rotatable member and the intermediate cylinder, and a helical coupling supported on helical rows of balls is provided between the intermediate cylinder and the shaft 3 corresponding to the second rotatable member.

According to the second embodiment of the present invention It is, of course, possible for the helical grooves to be provided between the pulley and the intermediate cylinder and the axial spline coupling to be formed between the intermediate cylinder and the rotatable shaft. The phase relation between the pulley and the shaft would be varied in substantially the same way as described above, with the intermediate cylinder and the rotating shaft retaining their angular relationship and the change in angular relationship being due to the relative movement of the intermediate cylinder and the pulley.

Although in these embodiments pulleys and rotating shafts have been described, it will be understood that the first and second rotatable members may be other components than these.

The phase-adjusting device of the present invention offers the following advantages; namely that the structure is simple and can be made of small size, and since the relatively movable parts are interconnected by the balls in grooves the force required for effecting relative movement is small and a stable action is ensured.

## Claims

1. A phase-adjusting device for adjusting the phase between rotatable members comprising a first rotatable member (5) and a second rotatable member (3) which is coaxially mounted within it, an inner cylindrical surface of the first rotatable member (5) and an outer cylindrical surface of the second rotatable member (3) each having a plurality of helical grooves (8A, 8B) formed thereon, the helical grooves of the said two members housing a plurality of balls (9) by which rotary motion is transmitted from one rotatable member to the other, and adjustment means for adjusting the relative phase of the said first and second rotatable members, characterised in that one of the said first and second rotatable members is formed as an intermediate cylinder (5) or sleeve between an inner rotatable shaft and an outer rotatable member, one of which constitutes the other of the said first and second rotatable members, the intermediate cylinder or sleeve being coupled for rotation with the other of the inner rotatable shaft or the outer rotatable member by a coupling which allows relative axial displacement thereof.

2. A phase-adjusting device according to Claim 1, characterised in that the said first rotatable member is formed as the said intermediate cylinder (5) or sleeve between the said inner rotatable shaft and the said outer rotatable member, the said outer rotatable member and the said intermediate cylinder or sleeve being coupled for rotation together by splined coupling comprising axial grooves (11A, 11B) in each of the said outer rotatable member and the said intermediate cylinder or sleeve, each groove housing a plurality of balls (13).

3. A phase adjusting device according to Claim 1, characterised in that the said second rotatable member is formed as the said intermediate cylinder or sleeve between the said inner rotatable shaft and the said outer rotatable member, the said inner rotatable shaft and the said intermediate cylinder or sleeve being coupled for rotation together by splined coupling comprising axial grooves in each of the said inner rotatable shaft and the said intermediate cylinder or sleeve, each groove housing a plurality of balls.

4. A phase adjusting device according to Claims 1 - 3, characterised in that the said plurality of balls (13, 9) in the said axial grooves and/or the said helical grooves are located in position by a cage (10, 12).

5. A phase-adjusting device according to any preceding claim, characterised in that the said inner rotatable shaft (3) is journalled in a bearing to permit rotational movement thereof without axial movement.

6. A phase-adjusting device according to any preceding claim wherein said outer rotatable member is provided with teeth on its outer surface to engage corresponding teeth on a belt (7) which can be engaged thereon.

7. A phase-adjusting device according to any preceding claim, wherein the said adjusting means comprises linear actuating means (16, 14) acting on one end of one of the said first and second rotatable members whereby to produce axial movement of the said one rotatable member with an attendant shift in the phase between the said first and second rotatable members.

8. A phase-adjusting device according to Claim 7, characterised in that the said adjusting means includes biasing means (17) acting against an opposite end of the said one rotatable member.

9. A phase-adjusting device according to Claim 8, characterised in that the said biasing means includes a thrust bearing and a spring (17).

10. A phase-adjusting device according to Claim 7, 8 or 9, characterised in that the said linear actuating means (16, 14) comprises a thrust bearing and an actuating cylinder.

11. A phase-adjusting device according to any of Claims 7 - 10, characterised in that the said linear actuating means has an actuating body (14) acting on one end of the said intermediate cylinder or sleeve.

12. A phase-adjusting device according to Claim 11, characterised in that the said intermediate cylinder (5) or sleeve is held by the said actuating body (14) whereby axial movement of the said actuating body moves the said intermediate cylinder axially causing said other of the said first and second rotatable members to be turned with respect to the said intermediate cylinder through an angle corresponding to the axial distance moved, whereby to change the relative angle or phase between the said first and second rotatable members.

## Patentansprüche

1. Phasen-Einstellvorrichtung zum Einstellen der Phase zwischen Drehelementen, aufweisend ein erstes Drehelement (5) und ein koaxial darin angeordnetes zweites Drehelement (3), wobei eine innere zylindrische Fläche des ersten Drehelements (5) und eine äußere zylindrische Fläche des zweiten Drehelements (3) jeweils mehrere darin ausgebildete Spiralnuten haben, und wobei die Spiralnuten (8A,8B) des zweiten Drehelements mehrere Kugeln (9) aufnehmen, durch die eine Drehbewegung von einem Drehelement zum anderen übertragen wird, und Einstellmittel zum Einstellen der relativen Phase zwischen dem ersten und dem zweiten Drehelement,
dadurch gekennzeichnet, dass
ein Drehelement, das erste oder das zweite, als Zwischenzylinder (5) oder - manschette zwischen einer inneren drehbaren Welle und einem äußeren Drehelement ausgebildet ist, wobei eines, das erste oder das zweite, das andere Drehelement bildet, und wobei der Zwischenzylinder oder - manschette drehbar mit der inneren drehbaren Welle oder dem äußeren Drehelement über eine Kupplung, die eine relative axiale Verschiebung ermöglicht, verbunden ist.

2. Phasen-Einstellvorrichtung nach Anspruch 1,
dadurch gekennzeichnet, dass
das erste Drehelement als Zwischenzylinder oder -manschette zwischen der inneren drehbaren Welle und dem äußeren Drehelement ausgebildet ist, wobei das äußere Drehelement und der Zwischenzylinder (5) oder - manschette drehbar über eine Keilkupplung miteinander verbunden sind, die axiale Nuten (11A, 11B) am äußeren Drehelement und dem Zwischenzylinder aufweist, wobei jede Nut mehrere Kugeln (13) aufnimmt.

3. Phasen-Einstellvorrichtung nach Anspruch 1,
dadurch gekennzeichnet, dass
das zweite Drehelement als Zwischenzylinder oder -manschette zwischen der inneren drehbaren Weile und dem äußeren Drehelement ausgebildet ist, wobei die innere drehbare Welle und der Zwischenzylinder oder - manschette drehbar über eine Keilkupplung miteinander verbunden sind, die axiale Nuten an der inneren drehbaren Welle und dem Zwischenzylinder aufweist, wobei jede Nut mehrere Kugeln (13) aufnimmt.

4. Phasen-Einstellvorrichtung nach Anspruch 1 - 3,
dadurch gekennzeichnet, dass
die mehreren Kugeln (13,9) in den axialen Nuten und/oder den Spiralnuten durch ein Raster (10,12) in Position gehalten werden.

5. Phasen-Einstellvorrichtung nach einen der vorhergehenden Ansprüche,
dadurch gekennzeichnet, dass
die innere drehbare Welle (3) auf einem Wellenlager gelagert ist, um eine Drehbewegung ohne eine axiale Verschiebung zu ermöglichen.

6. Phasen-Einstellvorrichtung nach einen der vorhergehenden Ansprüche, bei dem das äußere Drehelement mit einer Verzahnung an seiner äußeren Fläche versehen ist, um mit einer entsprechenden, mit ihr ineinandergreifenden Verzahnung an einem Riemen (7) zu kämmen.

7. Phasen-Einstellvorrichtung nach einen der vorhergehenden Ansprüche, bei dem die Einstellmittel ein lineares Stellglied (16,14) aufweisen, das an einem Ende des ersten oder des zweiten Drehelements zum Erzeugen einer axialen Verschiebung des ersten oder zweiten Drehelements mit einer begleitenden Phasenverschiebung zwischen dem ersten und dem zweiten Drehelement dient.

8. Phasen-Einstellvorrichtung nach Anspruch 7,
dadurch gekennzeichnet, dass
die Einstellmittel Vorspannmittel (17) umfassen, die am gegenüberliegenden Ende des ersten oder des zweiten Drehelements wirken.

9. Phasen-Einstellvorrichtung nach Anspruch 8,
dadurch gekennzeichnet, dass
die Vorspannmittel ein Axiallager und eine Feder (17) umfassen.

10. Phasen-Einstellvorrichtung nach Anspruch 7, 8 oder 9,
dadurch gekennzeichnet, dass
das lineare Stellglied (16,14) ein Axiallager und einen Stellzylinder aufweist.

11. Phasen-Einstellvorrichtung nach einen der Ansprüche 7 - 10,
dadurch gekennzeichnet, dass
das lineare Stellglied einen Stellglied-Rumpf (14) hat, der an einem Ende des Zwischenzylinders oder -manschette wirkt.

12. Phasen-Einstellvorrichtung nach Anspruch 11,
dadurch gekennzeichnet, dass
der Zwischenzylinder (5) oder -manschette von dem Stellglied-Rumpf (14) gehalten wird, wodurch eine axiale Verschiebung des Stellglied-Rumpfes den Zwischenzylinder axial verschiebt und das andere, das erste oder das zweite, Drehelement veranlaßt, sich bezüglich des Zwischenzylinders um einen Winkel entsprechend der axialen Verschiebungsdistanz zu drehen, wodurch der relative Winkel oder Phase zwischen dem ersten und dem zweiten Drehelement verändert wird.

## Revendications

1. Dispositif d'ajustement de phase pour ajuster la phase entre plusieurs éléments rotatifs, comprenant un premier élément rotatif (5) et un second élément rotatif (3) qui est coaxialement monté à l'intérieur du premier élément rotatif, une surface cylindrique intérieure du premier élément rotatif (5) et une surface cylindrique extérieure du second élément rotatif (3) présentant chacune une pluralité de rainures hélicoïdales (8A, 8B) formées sur elles, les rainures hélicoïdales desdits deux éléments logeant une pluralité de billes (9) par lesquelles le mouvement rotatif est transmis d'un élément rotatif à l'autre, et des moyens d'ajustement pour ajuster la phase relative desdits premier et second éléments rotatifs, caractérisé en ce que l'un des premier et second éléments rotatifs est formé à la manière d'un cylindre (5), ou d'un manchon, intermédiaire entre un arbre rotatif intérieur et un élément rotatif extérieur dont l'un constitue l'autre desdits premier et second éléments rotatifs, le cylindre ou le manchon intermédiaire étant couplé pour la rotation avec l'autre parmi l'arbre rotatif intérieur et l'élément rotatif extérieur, par un couplage qui permet leur déplacement axial relatif.

2. Dispositif d'ajustement de phase selon la revendication 1, caractérisé en ce que le premier élément rotatif est formé comme ledit cylindre (5), ou le manchon, intermédiaire entre l'arbre rotatif intérieur et l'élément rotatif extérieur, cet élément rotatif extérieur et le cylindre ou le manchon intermédiaire étant couplés ensemble, pour la rotation, par un couplage claveté comprenant des rainures axiales (11A, 11B) dans chacun parmi ledit élément rotatif extérieur et ledit cylindre ou manchon intermédiaire, chaque rainure logeant une pluralité de billes (13).

3. Dispositif d'ajustement de phase selon la revendication 1, caractérisé en ce que ledit second élément rotatif est formé comme ledit cylindre intermédiaire, ou le manchon, entre ledit arbre rotatif intérieur et ledit élément rotatif extérieur, l'arbre rotatif intérieur et le cylindre intermédiaire, ou le manchon, étant couplés ensemble pour la rotation par un couplage claveté comprenant des rainures axiales dans chacun parmi l'arbre rotatif intérieur et le cylindre intermédiaire, ou le manchon, chaque rainure logeant une pluralité de billes.

4. Dispositif d'ajustement de phase selon l'une quelconque des revendications 1 à 3, caractérisé en ce que lesdites billes (13, 9) dans les rainures axiales et/ou dans les rainures hélicoïdales sont logées en position par l'intermédiaire d'une cage (10, 12).

5. Dispositif d'ajustement de phase selon l'une quelconque des revendications précédentes, caractérisé en ce que ledit arbre rotatif intérieur (3) est monté dans un palier pour permettre son mouvement rotatif sans mouvement axial.

6. Dispositif d'ajustement de phase selon l'une quelconque des revendications précédentes, dans lequel ledit élément rotatif extérieur est pourvu de dents sur sa surface extérieure pour engager des dents correspondantes d'une courroie (7) qui peut être en prise avec lui.

7. Dispositif d'ajustement de phase selon l'une quelconque des revendications précédentes, dans lequel lesdits moyens d'ajustement comprennent des moyens d'actionnement linéaire (16, 14) agissant sur une extrémité de l'un parmi les premier et second éléments rotatifs, de manière à produire le mouvement axial de cet élément avec un changement correspondant de phase entre lesdits premier et second éléments rotatifs.

8. Dispositif d'ajustement de phase selon la revendication 7, caractérisé en ce que lesdits moyens d'ajustement comprennent des moyens de sollicitation (17) agissant contre une extrémité opposée dudit élément parmi les premier et second éléments rotatifs.

9. Dispositif d'ajustement de phase selon la revendication 8, caractérisé en ce que lesdits moyens de sollicitation comprennent un palier de poussée et un ressort (17).

10. Dispositif d'ajustement de phase selon l'une des revendications 7, 8 ou 9, caractérisé en ce que lesdits moyens d'actionnement linéaire (16, 14) comprennent un palier de poussée et un cylindre d'actionnement.

11. Dispositif d'ajustement de phase selon l'une quelconque des revendications 7 à 10, caractérisé en ce que lesdits moyens d'actionnement linéaire présentent un corps d'actionnement (14) agissant sur une extrémité dudit cylindre, ou du manchon, intermédiaire.

12. Dispositif d'ajustement de phase selon la revendication 11, caractérisé en ce que ledit cylindre intermédiaire (5), ou le manchon, est maintenu par ledit corps d'actionnement (14), de manière que le mouvement axial de ce corps d'actionnement déplace ledit cylindre intermédiaire axialement, provoquant ainsi la rotation dudit autre parmi les premier et second éléments rotatifs par rapport au cylindre intermédiaire, et ceci avec un angle correspondant à la distance axiale de déplacement, de manière à modifier l'angle relatif, ou la phase, entre lesdits premier et second éléments rotatifs.
